(19) Europäisches Patentamt
European Patent Office
Office européen des brevets

(11) **EP 2 666 363 A1**

(12) **EUROPEAN PATENT APPLICATION**
published in accordance with Art. 153(4) EPC

(43) Date of publication:
**27.11.2013  Bulletin 2013/48**

(51) Int Cl.:
***A23F 5/26*** (2006.01)

(21) Application number: **11856133.1**

(22) Date of filing: **01.08.2011**

(86) International application number:
**PCT/JP2011/067625**

(87) International publication number:
**WO 2012/098717 (26.07.2012 Gazette 2012/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.01.2011  JP 2011007366**

(71) Applicant: **Suntory Beverage & Food Limited
Chuo-ku, Tokyo 104-0031 (JP)**

(72) Inventors:
• **YOKOO, Yoshiaki
  Kawasaki-shi
  Kanagawa 211-0067 (JP)**
• **NAKAO, Yoshihiro
  Kawasaki-shi
  Kanagawa 211-0067 (JP)**
• **FURUTA, Hiroki
  Kawasaki-shi
  Kanagawa 211-0067 (JP)**

• **NAKAJIMA, Makoto
  Kawasaki-shi
  Kanagawa 211-0067 (JP)**
• **SHIMIZU, Hiroaki
  Kawasaki-shi
  Kanagawa 211-0067 (JP)**
• **MITSUHASHI, Morio
  Atsugi-shi
  Kanagawa 243-0213 (JP)**
• **OKA, Kitaro
  Tokyo 146-0094 (JP)**
• **SAKUMA, Chiseko
  Inagi-shi
  Tokyo 206-0824 (JP)**

(74) Representative: **Vossius & Partner
Siebertstrasse 4
81675 München (DE)**

(54) **METHOD FOR PRODUCING COFFEE EXTRACT**

(57)    A method for manufacturing a coffee extract is provided which method enables flavor ingredients of coffee to be extracted separately from bitter ingredients. A coffee extract is obtained by a method including a) a step of placing coffee granules in a granule container part substantially sealed by a restraining member, b) a step of guiding an extraction solvent from a first direction into the granule container part for extraction, and c) a step of retrieving, from the first direction, a coffee extract stored in the granule container part.

Figure 7

**Description**

TECHNICAL FIELD

The present invention relates to a method for manufacturing a coffee extract, in which excessive scorched bitterness involved in the roasting of coffee beans is reduced.

BACKGROUND ART

Commonly coffee beverages include coffee extracts extracted, using hot water or water, from granules into which roasted coffee beans are ground (hereinafter referred to as coffee granules). The coffee beverage is known to contain more than 300 types of flavor ingredients and about 10 types of nutrient ingredients and serves not only as a tasty beverage but also as a beverage with nutrient function claims. Thus, obtaining a coffee extract liquid with an excellent flavor is important for continuing to drink coffee beverages in everyday life for a long period.

A concentrated coffee extract is known as a coffee extract with an excellent flavor. The concentrated coffee extract refers to the first several thick droplets of coffee during extraction. It has been reported that the concentrated coffee extract is a thick and flavory coffee liquid which gives a thick texture on the tongue and which has an excellent aftertaste that disappears cleanly and that the best coffee is obtained by making the most of the attractive characteristics of the concentrated coffee extract (see Non-Patent Literature 1).

In general, methods for extracting coffee are roughly classified into a filtering method (drip type), a steeping method (stirring or boiling type), and an espresso method (vaporization type). For each of the extraction methods, various methods for obtaining a coffee extract with an excellent flavor have been proposed. For example, a steeping method (see Non-Patent Literature 2) involves limiting the amount of hot water and leaving a coffee extract unchanged for a specific time, and a method involves filling coffee granules into a glass pipe with opposite ends thereof open and slowly dripping cool water in a glass container into the glass pipe from above to collect eluate in the glass container over a long time (this type of coffee is called Dutch Coffee, cold-brew coffee, or drip coffee).

Furthermore, methods have been reported which suppress extraction of offensive ingredients to improve the flavor of the coffee extract. For example, a method involves filling coffee granules into an extractor, injecting hot water into the extractor from below the extractor, mixing the coffee granules with the hot water, and then allowing a coffee extract to flow out from the bottom of the extractor. This method has been disclosed to sufficiently stir and mix the coffee granules and the extraction solvent (hot water), enabling a reduction in time needed for extraction and thus a reduction in offensive ingredients such as harshness or astringency in a coffee bean which have been eluted in the extract liquid as a result of the long extraction (see Patent Literatures 1 and 2).

Moreover, methods for selectively removing offensive ingredients to improve the flavor of the coffee extract have also been reported. For example, a method involves selectively adsorbing and removing macromolecular brown-black ingredients such as chlorogenic acid polymers which make the coffee extract astringent, utilizing, as an adsorbent, activated carbon with an average pore radius distributed in the neighborhood of 30 to 100 A (Patent Literature 3). Another method involves mixing an oxygen treatment with an adsorption treatment with activated carbon, PVPP, activated white earth or the like to reduce the bitterness and astringency of tannin, caffeine, or the like (Patent Literature 4).

On the other hand, it is known that roasting coffee beans allows a honeycomb structure to be formed. Partition walls of the honeycomb structure have been reported to have a large surface area comparable to the surface area of a porous gel and thus to have an ingredient adsorptive capacity (see Non-Patent Literature 3).

CITATION LIST

PATENT LITERATURE

Patent Literature 1: Japanese Patent Laid-Open No. 01-148152
Patent Literature 2: Japanese Patent Laid-Open No. 2004-16586
Patent Literature 3: Japanese Patent No. 2578316
Patent Literature 4: Japanese Patent Laid-Open No. 2003-310162

NON-PATENT LITERATURE

Non-Patent Literature 1: Yukio Hirose et al., Kohigaku Kougi (Lecture on Science of Coffee), Ningen No Kagakusha (Tokyo), 2003
Non-Patent Literature 2: Makoto Takagi, Kohibunka Kenkyu (Study of Coffee Culture), 15, pp. 113-134, 2008
Non-Patent Literature 3: M.R. Jisha, et al., Mater. Chem. Phys., 115, pp. 33-39, 2009

SUMMARY OF INVENTION

TECHNICAL PROBLEM

Attempts have conventionally been made to reduce bitterness and astringency, which are offensive ingredients. However, in some cases, bitterness is successfully sufficiently removed, whereas astringency fails to be sufficiently removed, or in other cases, both bitterness and astringency are successfully removed but a rich fragrance, a flavor, and a rich taste unique to coffee are simultaneously removed to degrade the flavor of the coffee extract itself.

An object of the present invention is to provide a method for manufacturing a coffee extract which method allows a selective reduction in an excessively bitter taste with preferable flavor ingredients of coffee unchanged. Another object of the present invention is to provide a method for manufacturing a coffee extract with an excellent flavor for which excessive bitterness and astringency are selectively reduced with preferable flavor ingredients of coffee unchanged.

SOLUTION TO PROBLEM

As is known with the concentrated coffee extract, the surface of roasted beans has more aroma ingredients than the interior of the roasted coffee beans, thus allowing a flavory extract liquid to be efficiently obtained with a small amount of extract. However, bitter ingredients produced during the final stage of roasting are adsorbed on the outermost surface of the coffee beans. Thus, an extract liquid of the surface of the roasted beans gives an excessively bitter taste (sometimes referred to as "scorched bitterness"), and thus, obtaining a coffee extract with acidity, bitterness, and rich taste balanced is difficult.

The present inventors have earnestly studied methods for selectively removing scorched bitterness from an extract liquid of the surface of roasted beans, as methods for solving the above-described problem. As a result, the present inventors have found that the ingredients which show scorched bitterness has a strong affinity for partition walls of the honeycomb structure of the coffee beans. The present inventors have further found that a coffee extract can be obtained by utilizing the affinity to adsorb the scorched bitter ingredient on the partition walls of the coffee beans to separate the scorched bitter ingredient by placing coffee granules in a granule container part substantially sealed by a restraining member and passing an extraction solvent through a layer of accumulated coffee granules in such a manner that the extraction solvent reciprocates through the layer. Thus, the present invention has been completed. That is, the present invention relates to the following.

1. A method for manufacturing a coffee extract, the method including:

a) a step of placing coffee granules in a granule container part substantially sealed by a restraining member;
b) a step of guiding an extraction solvent from a first direction into the granule container part for extraction; and
c) a step of retrieving, from the first direction, a coffee extract stored in the granule container part.

2. The method set forth in 1, wherein, in step c), the coffee extract is retrieved by guiding water from a second direction opposite to the first direction.
3. The method set forth in 1 or 2, wherein, in step c), the extract liquid is retrieved in such a manner that an extraction rate is 20% or less.
4. The method set forth in any one of 1 to 3, wherein the restraining member is a mesh member.
5. The method set forth in any one of 1 to 4, wherein the coffee granules are accommodated so as to accumulate in such a manner that the coffee granules have a substantially rectangular cross-sectional shape in a direction along an axis.
6. The method set forth in any one of 1 to 5, wherein the restraining member is positioned in abutting contact with or in close proximity to a surface of deposited layers of the coffee granules which is opposite to the first direction.
7. The method set forth in any one of 1 to 6, wherein the first direction is on a lower side of the deposited layers of the coffee granules.
8. The method set forth in any one of 1 to 7, wherein, in step b), the extraction solvent is injected up to a position substantially aligning with a top surface of the deposited layers of coffee granules.

ADVANTAGEOUS EFFECTS OF INVENTION

The method for manufacturing according to the present invention allows easy obtainment of a coffee extract with a very excellent flavor (particularly a coffee extract of the surface of roasted beans) with the flavor and rich taste of coffee maintained and with only the excessively bitter taste of coffee reduced. Thus, for example, unprecedented coffee can be manufactured which has a clean finish and significantly exhibits the characteristics of coffee beans themselves even if the coffee is as thick as or thicker than espresso. Furthermore, the coffee extract obtained by the method for manufacturing according to the present invention has the advantages of being clear and having high preservation stability.

BRIEF DESCRIPTION OF DRAWINGS

Figure 1 is a conceptual drawing of behavior of ingredients in a method for manufacturing according to the present invention.
Figure 2 is a diagram showing an example of an extraction device that can be used for a method for manufacturing according to the present invention (coffee extraction device 1) .
Figure 3 is a diagram showing a circular filter with a diameter of 45 mm (Figure 3A) and a restraining member 11 (Figure 3B).
Figure 4 is a diagram showing a mode in which deposited  layers of coffee granules M is wholly covered with a nonwoven cloth that is the restraining member, that is, a granule container part 2 with a bag-shaped restraining member.
Figure 5 is a diagram of a case where the restraining member 11 is in the form of a lid member.
Figure 6 is a diagram of a coffee extraction device 1 which is similar to the coffee extraction device in Figure 2 and which includes an opening 2A formed at an upper end of the granule container part 2 which end corresponds to a direction opposite to a first direction and a conduit channel 5' connected to the opening 2A to guide water to the opening 2A.
Figure 7 is a diagram illustrating a coffee extraction device used in Test Example 1.
Figure 8 is a diagram illustrating the coffee extraction device used in Test Example 1.
Figure 9 is a diagram illustrating a coffee extraction device used in Example 4.
Figure 10 is a diagram in which the logarithms of the relative concentrations of ingredients are plotted for each fraction.
Figure 11 is a diagram showing the results of analysis of caffeine.
Figure 12 is a diagram showing the results of analysis of chlorogenic acid.
Figure 13 is a diagram showing the results of measurement of turbidity using extracts obtained using a CC method, a CD method, and a PD method.

DESCRIPTION OF EMBODIMENTS

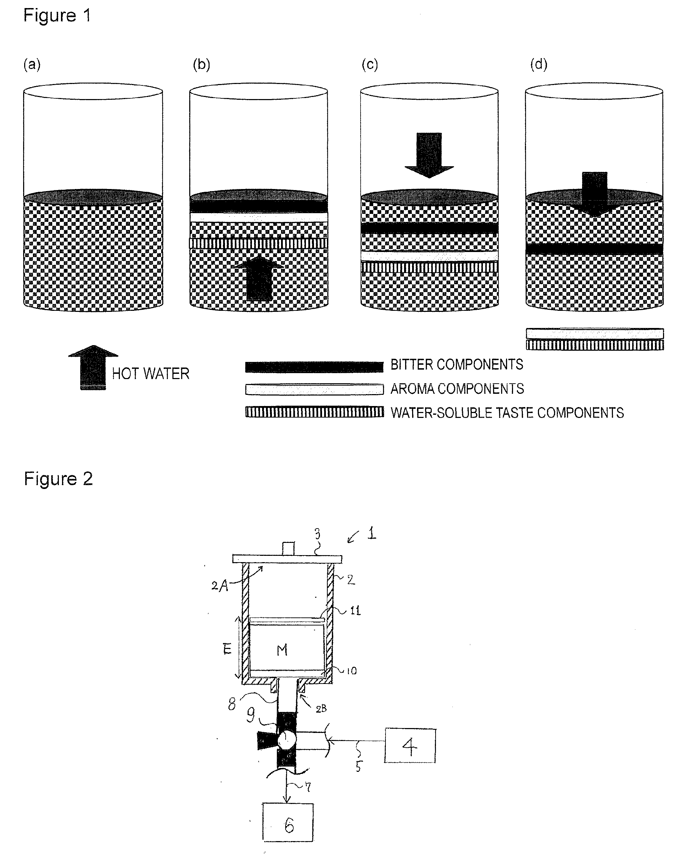

When coffee beans are roasted, moisture is evaporated from the coffee beans. The internal cell tissues of the coffee beans are hollowed to have a honeycomb structure. Carbon dioxide, aroma ingredients, taste ingredients (water-soluble taste ingredients), and the like in coffee are adsorbed on the protruding and recessed surfaces (partition walls) of the hollowed cell membranes. According to the present method for manufacturing, a small amount of extraction solvent is passed through the aroma ingredients and taste ingredients (water-soluble taste ingredients and bitter ingredients) adsorbed on the surface of the honeycomb structure, to temporarily desorb the aroma ingredients and the taste ingredients to expose the surface of the honeycomb structure. Scorched bitter ingredients, included in the desorbed ingredients, are then selectively caught (resorbed) and thus removed in a separable manner. The greatest characteristic of the method for manufacturing according to the present invention is that roasted coffee beans with the surface of the honeycomb structure exposed are utilized as an adsorbent.
The present invention consecutively carries out a step of exposing the surface of the honeycomb structure and a step of adsorbing scorched bitterness on the exposed honeycomb structure without the need for a cumbersome operation. Specifically, the present invention adopts a method of passing an extraction solvent through a layer of coffee granules packed (fixed) in a substantially sealed manner so that the extraction solvent reciprocates through the layer. When  coming into the first contact with the coffee granules (forward path), the extraction solvent temporarily desorbs the aroma ingredients and taste ingredients (water-soluble taste ingredients and bitter ingredients) adsorbed on the surface of the honeycomb structure to expose the surface of the honeycomb structure. The extraction solvent containing the desorbed ingredients is brought into contact with the coffee granules with the surface of the honeycomb structure exposed to selectively resorb only the bitter ingredients in the extraction solvent (see Figure 1).
The "reciprocation of the extraction solvent" as used herein refers to the flow of the extraction solvent in which, for example, the extraction solvent reciprocates in the direction of gravity or a horizontal direction with respect to the layer of the coffee granules, and means that the extraction solvent temporarily flows in one direction and subsequently in the opposite direction. For example, the reciprocation of the extraction solvent refers to the flow of water (extraction solvent) in which if the extraction solvent guided in to desorb the ingredients adsorbed on the honeycomb structure flows in an antigravitational direction through the coffee granule layer, an extract liquid of the surface of the resultant roasted beans flows in the direction of gravity.

The method for manufacturing according to the present invention will be described below in connection with specific embodiments based on the drawings. However, the present invention is not limited to these embodiments.

Figure 2 shows a coffee extraction device 1 in a vertical orientation. The coffee extraction device 1 includes a granule container part 2 with an upper opening 2A formed at an upper end thereof, a lower opening 2B (which serves both as an injection port and as a takeout port) formed at a lower end thereof, and an extraction section E storing coffee granules M, a lid member 3 that can be freely installed on and removed from the upper opening 2A, a conduit channel 8 that is in communication with the lower opening 2B in the granule container part 2, an extraction solvent tank 4, a supply channel 5 that injects the extraction solvent from the extraction solvent tank 4 into the lower opening 2B, and a liquid feed channel 7 that transfers a coffee extract from the lower opening 2B to a storage tank 6. The conduit channel 8 is connected to the supply channel 5 and the liquid feed channel 7 by a three-way valve 9.

(Step a)

When the apparatus shown in Figure 2 is used, first, coffee granules are placed in the extraction section E so as to be substantially sealed by a restraining member according to the present method for manufacturing. As described above, the present invention utilizes roasted coffee beans with the surface of the honeycomb structure exposed as an adsorbent. To make the most of the effects of the adsorbent, it is important to accommodate coffee granules in the granule container part in a substantially sealed manner. The term "substantially sealed" as used herein refers to a state in which, when the extraction solvent is passed through the coffee granules, the coffee granules are prevented from moving around inside the granule container part and means that the deposited layers of the coffee granules are enclosed by walls of the granule container part, a filter member, the lid member and the like. In Figure 2, a lower filter member 10 (first filter medium) is installed on the lower side of the granule container part 2 (in a first direction), coffee granules M are accommodated on an upper surface of the lower filter member 10, and a restraining member (second filter member) 11 is positioned in abutting contact with or in close proximity to an opposite surface (uppermost surface) of the deposited layers of the coffee granules M. That is, the coffee granules M are accommodated in the extraction section E of the granule container part 2 in a substantially sealed manner by a right wall surface and a left wall surface present in a direction along the axis of the granule container part 2, the lower filter member 10, and the restraining member 11. In the specification, the extraction section E corresponds to a portion of the coffee granule container part 2 in which the coffee granules M are accommodated in a substantially sealed manner, that is, the interior of an area between the position of the lower filter member 10, provided at the lower end position of the granule container part 2, and the position of the restraining member 11, removably provided above the lower filter member so as to internally contact the granule container part 2.

The coffee granules M, an extraction material according to the present invention, may be granules obtained by grinding roasted coffee beans. A tree species grown for the coffee beans is not particularly limited and may be, for example, an Arabica species or a Robusta species. The method according to the present invention is characterized by obtaining a coffee extract having a clean finish even when the coffee is thick and exhibiting significant characteristics, and using much of the Robusta species leads to an excessively emphasized Robusta smell. Thus, particularly the Arabica species is preferably used. Furthermore, the coffee brand is not particularly limited and may be, for example, Mocha, Brazil, Columbia, Guatemala, Blue Mountain, Kona, Mandheling, or Kilimanjaro. A plurality of coffee brands may be blended together to be used.

The degree of roasting (normally expressed as light roast, medium roast, and extra roast in order of increasing degree of roasting) is also not particularly limited. In general, coffee beans roasted at the light level and at the extra level are known to have the following features. Coffee beans roasted at the light level fail to exhibit the rich characteristics of the coffee beans themselves, and serve to reduce a scorched smell resulting from roasting but are not heated up to the interior of the beans and tend to give an unfavorable taste or an acid taste. Coffee beans roasted at the extra level serve to increase a scorched smell on the surface, but give a bitter taste which is unique to coffee and which results from roasting as well as a spicy fragrance rising therefrom, leading to an attractive flavor. The medium roast and the extra roast are preferred because these types of roasts serve to make the most of the characteristic of the present invention that the present invention produces a coffee extract with scorched bitterness restrained and significant characteristics exhibited. In terms of an L value, the range from 15 to 24 is preferable, the range from 16 to 22 is more preferable, and the range from 16 to 20 is particularly preferable. The L value is a numerical value for the surface color of coffee granules into which roasted coffee beans are ground and is indicative of lightness (0 is indicative of black, and 100 is indicative of white). The L value of the coffee granules can be measured using, for example, a color-difference meter. The use of coffee beans roasted at the extra level also advantageously improves the efficiency of extraction of nutrient ingredients.

The degree of grind of roasted coffee beans (normally classified into coarse grind, medium grind, fine grind and the like) is not particularly limited, and ground beans with different grain size distributions can be used. However, an excessively low degree of grind is likely to cause the first filter member to be clogged, increasing time needed for extraction to cause over-extraction. Thus, in particular, the medium grind and/or the coarse grind is a preferred aspect of the present invention. In terms of average grain size after grind, the range from about 0.1 mm to about 2.0 mm is preferable, the range from about 0.5 mm to about 2.0 mm is more preferable, and the range from about 1.0 mm to about 1.5 mm is particularly preferable. The term "over-extraction" as used herein refers to a phenomenon in which the extraction solvent comes into excessive contact with the coffee granules to extract an astringent taste and an unfavorable taste from inside the coffee beans.

The first filter member is installed in order to prevent the coffee granules from falling and mixing into the coffee extract. Any filter member that meets this object may be used. Specific examples of the first filter member may be mesh members such as a metal mesh, a nonwoven cloth (e.g. flannel cloth or lint cloth), and a paper filter. A filter member with an excessively small mesh size is likely to be clogged, increasing time needed for extraction to cause over-extraction. Thus, for a metal mesh, the mesh size is preferably about 20 to about 200 in terms of American mesh size. Furthermore, a nonwoven cloth is preferably used because the nonwoven cloth can adsorb and remove oil contained in the coffee extract.

In step b described below, the coffee granules M are deposited and accommodated in the granule container part 2 shaped to have an approximately uniform inner diameter in the advancing direction (in Figure 1, the antigravitational direction (down-up direction)) of the extraction solvent so that the extraction solvent comes into even contact with the coffee granules M. That is, the coffee granules M are deposited in the form of a cylinder or a rectangular parallelepiped (including a cubic) so as to have a substantially rectangular cross-sectional shape in a direction along the axis of the deposited layers of the coffee granules M. The present invention utilizes the coffee granules as an adsorbent, and the shape (the relation between the cross-sectional area and the height) of the extraction section E is important in making the most of the adsorption effect. Although depending on the characteristics of the coffee granules such as the grain size, the coffee granules M are generally preferably accommodated in the extraction section E so that, in a substantially rectangular cross-sectional shape in the direction along the axis of the extraction section E, the ratio (H/L) of the width (L) to height (H) of the rectangle is in the range of 0.1 to 10, preferably 2 to 6, and more preferably 3 to 6. Above these ranges, the extraction may take much time or clogging may occur, leading to over-extraction. Furthermore, below the ranges, the adsorption effect of the present invention may not sufficiently be produced.

In Figure 2, the restraining member 11, removably positioned above the lower filter member so as to internally contact the granule container part 2, allows the coffee granules M to be accommodated in a substantially sealed manner. Normally, during coffee extraction, the coffee granules move around (flows) in response to injection of the extraction solvent. For example, in the drip extraction, the coffee granules float up close to the liquid surface or move along the path through which the extraction solvent is injected. In the steeping extraction, the coffee granules float up close to the liquid surface or flow swiftly due to natural convection or stirring. According to the present invention, the restraining member 11 is positioned in abutting contact with or in close proximity to the uppermost surface of the coffee granules M to hold the coffee granules M in a substantially sealed manner. This prevents the coffee granules from moving around during extraction. The coffee granules prevented from moving around enable the target bitter ingredient to be resorbed on the partition walls of the exposed coffee honeycomb structure.

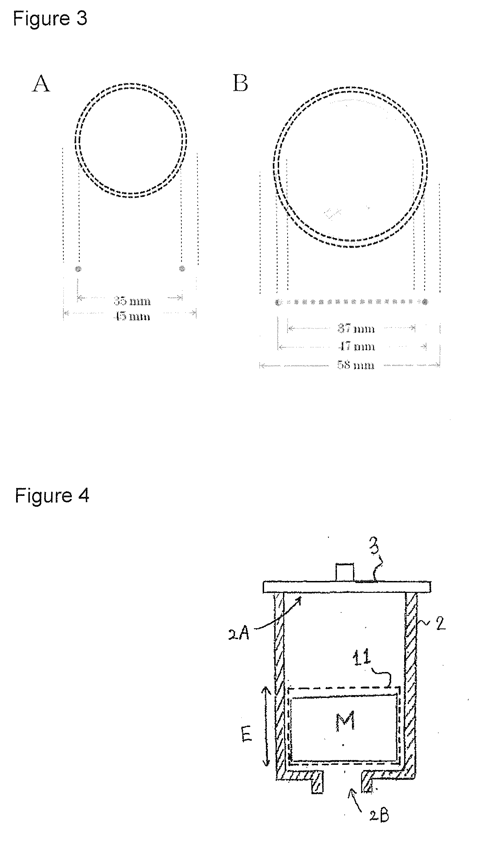

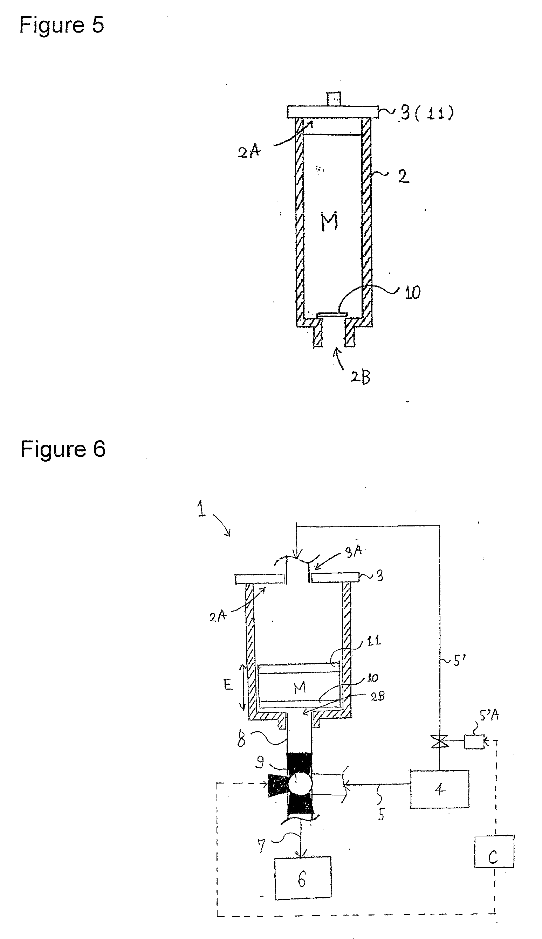

Thus, the material, shape, and the like of the restraining member 11 are not particularly limited provided that the restraining member 11 can hold the coffee granules M in a substantially sealed manner and internally contact the granule container part 2. An example of the restraining member may be a mesh member (hereinafter sometimes referred to as a second filter member) similar to mesh member of the first filter member. If a mesh member is used restraining member, then preferably a peripheral portion of the mesh member is formed of an elastic material (for example, cotton flannel) and the restraining member 11 is brought into pressure contact with the inner surface of the granule container part 2 to enhance the braking function (see Figure 3). Furthermore, Figure 4 shows a mode in which the whole deposited layers of the coffee granules M are covered with a nonwoven cloth serving as the restraining member, that is, the granule container part 2 with a bag-shaped restraining member. In this mode, the first filter member and the second filter member are not distinguished from each other, and the restraining member functions as the first filter member. Moreover, it is assumed that the present invention includes a mode in which the restraining member 11 is in the form of a lid member as shown in Figure 5.

The restraining member is positioned in abutting contact with or in close proximity to the uppermost surface of the deposited layers of the coffee granules M in a dry state so as to substantially seal the coffee granules M. The position where the restraining member 11 is in close proximity to the coffee granules M refers to a position where, when the coffee granules M are wetted with the extraction solvent, the restraining member is separated from the uppermost surface of the deposited layers of the coffee granules M by a distance corresponding to the amount of natural bulging (void) of the coffee granules. Specifically, the position refers to the interior of the area between the position where the coffee granules are slightly compressed (so as to reduce the volume of the coffee granules to about nine-tenths) and a position which corresponds to the approximately doubled volume of the coffee granules (preferably the original volume multiplied by about 1.5) and which is used taking into account the bulging of the coffee granules after contact with the extraction solvent.

(Step b)

Subsequently to step a described above, the extraction solvent is guided into the extraction section E for extraction from the first direction (step b). In the apparatus shown in Figure 2, the "first direction" as used herein is shown as the lower side of the deposited layers of the coffee granules.

The present inventors have confirmed that the method for manufacturing according to the present invention is effective in reducing scorched bitterness at any temperature of the extraction solvent. However, an elevated temperature of the extraction solvent allows the rich fragrance, flavor, and rich taste unique to coffee to be more appropriately extracted and also allows the rich characteristics of coffee beans themselves to be more appropriately exhibited. Thus, water at 15°C to 10°C or preferably hot water at 50°C to 98°C is preferably used as the extraction solvent. In particular, the present inventors have confirmed that the use of hot water at 60°C to 95°C allows a coffee extract with a strong odor and a sweet taste to be obtained.

In step b, water (preferably hot water) is brought into contact with the coffee granules M placed in the granule container part in a substantially sealed manner in step a) to temporarily desorb the ingredients (aroma ingredients and taste ingredients produced mainly during roasting) adsorbed on the partition walls of the honeycomb structure of roasted coffee beans. Thus, the surfaces of the partition walls of the honeycomb structure are exposed. That is, preparation is made to carry out efficient separation of bitter ingredients utilizing the coffee granules as an adsorbent, which is characteristic of the present invention.

Any amount of extraction solvent may be passed in step b provided that the amount enables the ingredients adsorbed on the partition walls of the honeycomb structure to be temporarily desorbed. The amount is equal to the volume of the coffee granules M multiplied by about 0.3 to about 2 or preferably about 0.5 to about 1.5 or is more preferably such that the extraction solvent is injected substantially up to the upper surface of the deposited layers of the coffee granules M. In step b, the use of a small amount of extraction solvent can produce an extract liquid of the surface of the roasted beans having rich aroma ingredients and rich taste ingredients. Feeding an amount of extraction solvent exceeding the above-described range may reduce the efficiency with which scorched bitter ingredients are separated in step c described below or may cause an unfavorable taste to be extracted from inside the coffee beans to degrade the flavor of the extract. The amount of extraction solvent injected may be controlled by a level gauge provided in the granule container part or calculated from the volume of the coffee granule layer. An example of a calculation is illustrated below. In general, the bulk specific gravity of coffee granules resulting from the medium roast and medium grind is 0.3 to 0.5. For example, if 10-g coffee granules are filled into a glass pipe with an inner diameter of 55 mm, the volume of the extraction section is approximately 25 mL, and the volume of the extraction solvent needed to fill the extraction section up to the upper surface thereof is 15 mL per 10-g granules.

The extraction solvent the amount of which falls within the above-described range is passed through the granule container part 2 at a velocity SV (Space Velocity) = about 3 to about 100. Then, the ingredients adsorbed on the coffee granules M can be effectively desorbed. A more preferable liquid passage rate SV is about 5 to about 70, preferably about 5 to about 50, or more preferably about 6 to about 40.

(Step c)

In step c, the extraction solvent (water or preferably hot water) is brought into contact with the coffee granules. Then, it is expected that strong bitter ingredients produced during the final stage of roasting and adsorbed on the uppermost surface of the partition walls are first desorbed and that a solution containing a high concentration of these ingredients is temporarily transferred toward a direction opposite to the first direction (in Figure 2, the upper side of the deposited layers of the coffee granules M) (see Figure 1(b)). The resultant coffee extract is retrieved from the direction opposite to the first direction toward the first direction (step c). It is expected that the coffee extract passes through the deposited layers of the coffee granules M with the partition walls of the honeycomb structure exposed, allowing the excessively bitter ingredients to be resorbed on the partition walls of the honeycomb structure for separation (see Figures 1 (c) and 1(d)).

Means for retrieving the coffee extract from the first direction is not particularly limited. Examples of the means include (i) a method of retrieving the coffee extract by suction with a pump or the like from the first direction (in Figure 2, the lower side of the extraction section), (ii) a method of retrieving the coffee extract by introducing air or the like from the direction opposite to the first direction (in Figure 1, the upper side of the extraction section) to pressurize the coffee extract, that is, retrieving the coffee extract by pressurization, and (iii) a method of retrieving the coffee extract by injecting water from the direction opposite to the first direction (in Figure 2, the upper side of the extraction section) to push the coffee extract (this method is hereinafter sometimes referred to as "water derive"). The pressurization methods (methods (i) and (ii)) may cause bitter ingredients adsorbed on the partition walls to be desorbed depending on the magnitude of the pressure. Thus, the method of retrieving the coffee extract by water drive is simple and easy and is a preferred aspect.

Figure 6 shows a coffee extraction device 1 which is similar to the coffee extraction device in Figure 2 and which includes an opening 2A formed at an upper end of a granule container part 2 which end corresponds to the direction opposite to the first direction and a conduit channel 5' connected to the opening 2A to guide water to the opening 2A. The method of retrieving the coffee extract by water drive will be described in detail based on Figure 6. Coffee granules are accommodated in an extraction section E of the cylindrical granule container part 2 in a vertical orientation so that an upper surface and a lower surface of the coffee granules M are pressed by the respective filters to substantially seal the coffee granules M. An operation of opening a three-way valve 9 is performed to inject an extraction solvent (water or preferably hot water) from a medium tank 4 (for example, a hot water tank) to the opening 2B. Thus, the extraction solvent is filled from the lower side of the deposited layers of the coffee granules M substantially up to the upper surface of the deposited layers of the coffee granules M. At this time, no extract liquid is retrieved until the extraction solvent substantially reaches the upper surface of the deposited layers of the coffee granules M, maintaining a silent hold state. When the extraction solvent is injected up to a predetermined position, an operation of opening a supply valve 5A' is performed to inject the extraction solvent (water or preferably hot water) from the extraction solvent tank 4 to the upper opening 2A in the granule container part 2 via an opening 3A formed in a lid part 3. Then, a coffee extract is retrieved through the lower opening 2B in the granule container part 2 by water drive.
The temperature and the like of the water injected through the opening 2A are not particularly limited provided that the water can be used for water drive.

The present inventors' studies indicate that bitter ingredients have the following property. That is, the bitter ingredients adsorbed on the uppermost surface of the partition walls during roasting are easily desorbed by being brought into contact with water (particularly hot water), but the bitter ingredients resorbed on the exposed partition walls of the honeycomb structure have a strong affinity for the partition walls and are unlikely to be desorbed even when brought into contact with hot water. In general, an extraction residue of the coffee granules is expected to contain extract liquid ingredients which have the same concentration as that of extract liquid ingredients in the coffee extract and which are equivalent to or larger than residual solids in amount. Thus, extract liquid ingredients contained in the extraction residue of the coffee granules can be efficiently extracted by retrieving, by water drive, an extract liquid of the surface of the roasted beans obtained in step a and then continuing to inject the extraction solvent (water) into the extraction section E through the opening 2A to continue the extraction with the water. Thus, the temperature or amount of water injected through the opening 2A may be set as appropriate depending on the purpose of retrieving an extract liquid of the surface of the roasted beans by water drive or extracting extract liquid ingredients from the extraction residue of the surface of the roasted beans. The temperature of the water may be changed in stages. For the purpose of extracting extract liquid ingredients with an excellent flavor from the extraction residue of the surface of the roasted beans, the temperature of water guided from the second direction according to the present invention is 15°C to 100°C, preferably 50°C to 98°C, or more preferably 60°C to 95°C.

The present inventors' examinations indicate that unfavorable ingredients of the coffee extract include not only excessively bitter ingredients (scorched bitterness) adsorbed on the uppermost surface of the partition walls of the coffee beans but also astringent ingredients eluted during the middle and last periods of extraction and left on the tongue. In step c, in the method of retrieving a coffee extract by water drive, a coffee extract with a better flavor can be efficiently obtained by controlling the extraction such that the retrieval of the astringent ingredients is avoided which are eluted during the middle and last periods of extraction and which are left on the tongue. Specifically, the sampled amount of coffee extract retrieved through the lower opening 2B in the granule container part 2 by water drive is equal to the volume of the coffee granules M multiplied by about 0.5 to about 5, preferably about 1 to about 3, or more preferably about 1 to about 2. When the sampled amount is more than five times as large as the volume of the coffee granules M, the astringent ingredients in the extract liquid are perceived.

Such extraction results in a coffee extract extraction rate of 20% or less or preferably 15% or less.

$$\text{Coffee extraction rate (\%)} = \{\text{weight of extract (g)}\}$$
$$\times \{\text{Brix of extract (\%)}\}/\{\text{weight of coffee granules (g)}\}$$

(Brix is indicative of soluble solids measured with a refractometer. An example of the refractometer may include a digital refractometer RX-5000$\alpha$ manufactured by ATAGO CO., LTD.)

In step c, the coffee granules with the surface of the partition walls of the honeycomb structure exposed are used as an adsorbent and an extract liquid of the flavory surface of the roasted beans obtained in step b is passed through the coffee granules to resorb scorched bitter ingredients in the extract liquid on the coffee granules. In this case, for efficient adsorption, the liquid passage rate is important. In step c, the velocity (SV (Space Velocity) at which the extraction solvent is passed through the coffee granules is preferably about 3 to about 100, more preferably about 5 to about 70, further more preferably about 5 to about 50, or particularly preferably about 6 to about 40.

In step b, when the extraction solvent is injected into the extraction section E, bubbles sealed in the coffee granules are released into the extraction section E, in which the bubbles stay. The flow velocity of the extract liquid is significantly impacted by the bubbles present in the extraction section E. Thus, the bubbles in the extraction section are preferably removed before step c and/or simultaneously with step c in order to facilitate the control of the flow velocity and to prevent astringent ingredients from being eluted (over-extracted) due to an excessively long time needed for extraction. Means for removing the bubbles in the extraction section is not particularly limited. The extraction section may be degassed by a publicly-known method before or after the coffee granules are placed in the granule container part 2. Examples of the publicly-known degassing method include a decompression process, a method of carrying out degassing by applying a physical stimulus such as vibration to the extraction section E, a method of carrying out degassing by ultrasound, and a method of carrying out degassing using an inserted degassing pipe. The present inventors have confirmed that when the column of the extraction section is slightly vibrated from outside the extraction section using a commercially available handy vibrator (THRIVE (registered trade mark) manufactured by DAITO ELECTRIC MACHINE INDUSTRY CO., LTD.), bubbles in the granule layer move upward and are removed from the mesh member 11.

In the method for manufacturing a coffee extract according to the present invention, water (preferably hot water) passes, in a reciprocating manner, through the layer of the coffee granules deposited in a substantially sealed manner. That is, water (preferably hot water) is passed from the first direction to the opposite direction (second direction) and then discharged from the second direction toward the first direction. The first amount of coffee extract discharged from the extraction section has not substantially passed through the layer of the coffee granules, and is thus a very dilute solution. Preferably, an extract liquid is retrieved after the first solution is disposed of. However, the first solution does not contain any bitter ingredient or any astringent ingredient, which is left on the tongue, and may thus be retrieved along with the subsequent extract. The liquid discharged as the dilute solution is a liquid discharged during the very initial period of extraction and corresponding to an extraction rate of about 1%.

EXAMPLES

The present invention will be described below in detail based on examples. However, the present invention is not limited to the examples.

<Test Example 1>

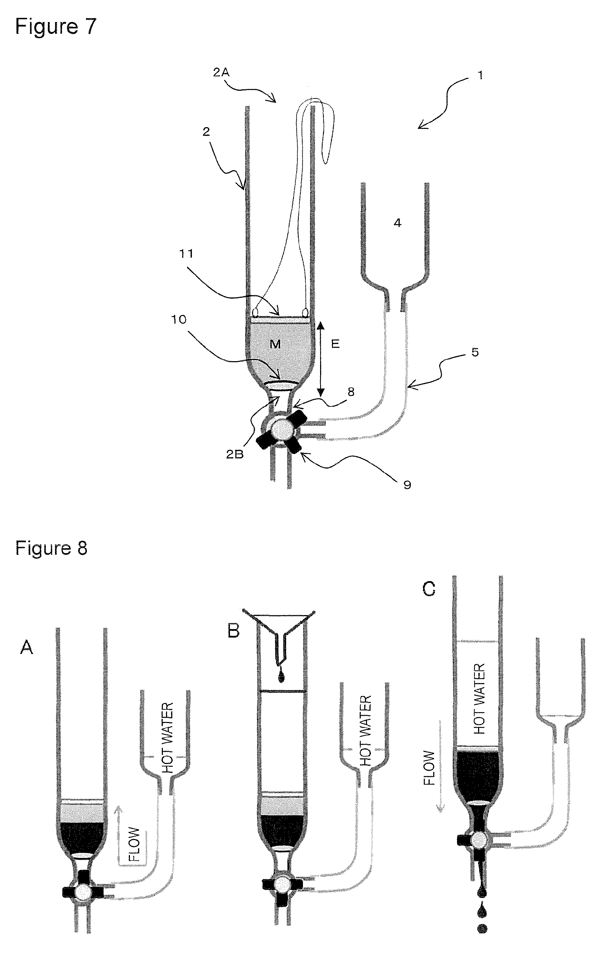

Figure 7 is a diagram illustrating a coffee extraction device 1 according to an embodiment of the present invention which was used in Test Example 1. The coffee extraction device 1 includes a substantially cylindrical granule container part 2 with an upper opening and a lower opening (2A and 2B) (the inner diameter of the upper opening: 55 mm and the length of the upper opening: 250 mm), and has an extraction pipe (glass pipe/chromatography pipe) 8 formed at a lower end of the granule container part 2 and having a three-way cock, and a hot water container (glass pipe) 4 having an inner diameter of 50 mm and a length of 100 mm and connected to the three-way cock 9 of the extraction pipe 8 via a tube 5.

A filter 10 was installed in a bottom portion of the granule container part 2, and 40-g coffee granules (Arabica coffee beans grown in Ethiopia and roasted in an Italian manner were ground at the medium level) were placed on an upper surface of the filter 10. A restraining member 11 for braking the flow of the coffee granules was placed slightly away from an upper surface of the deposited layers of the coffee granules (placed at a position where, when the coffee granules are bulged as a result of contact with an extraction solvent, the upper surface of the deposited layers of the bulged coffee granules comes into abutting contact with the restraining member 11). The filter 10 was a circular filter (Figure 3A) with a diameter of 45 mm including six lint clothes sewed together in an overlapping manner, an O ring sealed in the sewed lint clothes and formed of wire with a diameter of 1 mm and having a diameter of 35 mm, and an appropriate amount of small pieces of lint cloth sealed in the sewed lint clothes so as to increase the thickness of a central portion thereof. The restraining member 11 included a ring member having an outer diameter of 58 mm and an inner diameter of 37 mm and including an O ring formed of wire with a diameter of 1 mm and having a diameter of 47 mm and sewed on eight overlapping ring-like lint clothes, an inner diameter portion of the ring member being sealed with (a piece of) cotton gauze (Figure 3B).

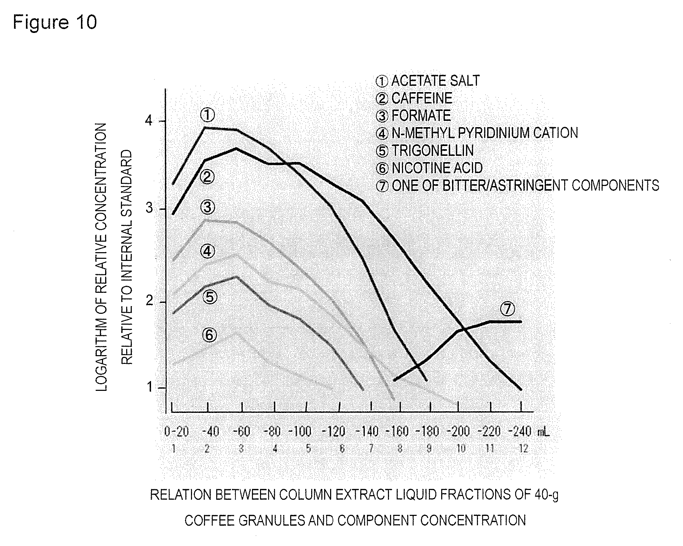

With the three-way cock 9 closed, 100-mL hot water (95°C) was added to the hot water container 4. A lower tip of the hot water container 4 was fitted into an upper end (the position of the restraining member 11) of an extraction section E, and an operation of opening the three-way cock 9 was performed to inject hot water from the lower side of the apparatus (first direction) into the extraction section E (Figure 8A). When a surface of the hot water flowing upward through the granule layer in the extraction section E comes into contact with the restraining member 11, the cock 9 was closed and subsequently 400-mL hot water (90°C) was injected toward the extraction section E through the upper opening 2A, located on the upper side of the deposited layers of the coffee granules (second direction) (Figure 8B). An operation of opening the cock 9 was performed to retrieve and inject an outflow coffee extract into a 100-mL graduated cylinder (Figure 8C). When bubbles generated during extraction caused clogging, an aligning string 1g attached to the restraining member 18 was operated to remove bubbles. Thus, outflow velocity was adjusted. The extract liquid was fractionated into 20-mL fractions, and 12 fractions were retrieved. Then, a 0.5-mL extract liquid of each fraction was placed in an NMR measurement pipe, and 0.58-mmol TSP-d4 (3-(trimethylsilyl)propionic-2,2,3,3-$d_4$ acid sodium salt) was added as an internal standard substance, to the extract, which was then stirred well. Measurement was carried out by a 1D-NOESY-presaturation pulse sequence technique using a nuclear magnetic resonance apparatus (Avance 600 apparatus manufactured by Bruker Biospin in Switzerland). Then, the standard signal of TSP-d4 and the particular signal of each ingredient were compared with each other in terms of height, the signals being observed at a chemical shift 0.00 ppm in an NMR spectrum. The particular signals of the respective ingredients were a singlet at 3.23 ppm for caffeine, a singlet at 1.95 ppm for acetate salt, a singlet at 8.45-ppm for formate, a singlet at 9.11 ppm for trigonellin, a doublet at 8.79 ppm for N-methyl pyridinium cation, a singlet at 8.95 ppm for nicotine acid, and a singlet at 9.65 ppm for a bitter ingredient with an unknown structure. The ratio of each of these signal heights to the signal height for TSP-d4 was determined to be the relative concentration of the corresponding ingredient relative to the internal standard TSP-d4. The logarithm of the relative concentration was then plotted for each fraction, with results shown in Figure 10 obtained. Figure 10 shows that main nutrient ingredients of coffee can be very efficiently extracted, that is, extracted with no waste in a short time, by retrieving fractions 1 to 7, preferably fractions 2 to 7, or more preferably fractions 2 to 5.

Furthermore, the fractions of the extract liquid obtained from the present test was subjected to a sensory rating by expert panelists (ten persons). In the sensory rating, the favorableness of the flavor was evaluated on a scale of 1 to 5 based on the mutual consent of the panelists through a comparison with an extract liquid (control) obtained by the conventional drip method (KALITA dripper, model number: 102D, for two to four persons) using 40 g of the same roasted beans as those in the present test (roasted beans ground under the same conditions) and 200 mL of hot water. The results are shown in Table 1. The results clearly show that a total of 40-mL fractions 2 and 3 had very excellent flavors, and even when diluted by a factor of 5, gave a better flavor than the control extract liquid obtained by the drip method. Furthermore, the fraction 1 did not taste bad but was watery and undrinkable. The fractions 4 and 5 fell well short of the fractions 2 and 3 but had a better flavor than the control. Additionally, the fractions 6 and 7 had a flavor comparable to the flavor of the control, and the other fractions had astringent ingredients and were undrinkable. Thus, it has been found that, according to the method for manufacturing according to the present invention, a coffee extract with a dramatically excellent flavor can be obtained by retrieving the fractions 1 to 7 (extraction rate of 1% to 20%), preferably the fractions 2 to 7 (extraction rate of 5% to 20%), or more preferably the fractions 2 to 5 (extraction rate of 5% to 15%).

The above-described results suggest that the appropriate flavor ingredients of roasted coffee can be extracted separately from astringent ingredients eluted during the latter half of the extraction and left on the tongue, by the method of carrying out the extraction with separation according to the present invention to avoid the retrieval of the astringent ingredients. The results also suggest that the method allows the extraction of not only the appropriate flavor ingredients of coffee but also nutrient ingredients that prevent possible lifestyle-related diseases with high efficiency.

[Table 1]

| Rating | Corresponding fractions |
| --- | --- |
| Very excellent | 2, 3 |
| Excellent | 4, 5 |
| Same as the drip method | 6, 7 |
| Watery and undrinkable | 1 |
| Undrinkable | 8, 9, 10, 11, 12 |

<Example 1>

A coffee extract was manufactured using 30-g Arabica beans grown in Guatemala and roasted and ground at the medium level. As an extraction device, a coffee extraction device was used which was of the same type as that shown in Figure 7 and in which a granule container part 2 had an inner diameter of 25 mm (this method is hereinafter referred to as a CC method: Column Chromatography). A flannel cloth was used as a lower filter member 10, and as a restraining member (upper filter member) 11, a metal mesh of about 80 m/s was used around which silicon packing was installed to allow the metal mesh to tightly contact the column. The lower filter member 10 and the restraining member 11 were positioned in abutting contact and in alignment with a lower surface and an upper surface, respectively, of deposited layers of coffee granules. A three-way cock 9 was operated to inject 90-mL hot water (90°C) from the lower side of the apparatus to an extraction section E at SV = 1. When the surface of the hot water flowing upward through the coffee granule layer comes into contact with the upper filter member 11, the cock 9 was closed. Subsequently, 1,200-mL hot water (90°C) was injected toward the extraction section E through an upper opening 2A. The resultant extract liquid was then retrieved at SV = 1 at extraction rates of 10%, 15%, 20% and 25%, and was evaluated for the flavor thereof. For comparison, a coffee extract was obtained by a unidirectional extraction method using the same amount of the same roasted beans (roasted beans ground under the same conditions) and the coffee extraction device shown in Figure 1 (CD method: Column Drip) . Furthermore, a coffee extract was obtained using an extraction device of a conventional drip type (KALITA dripper, model number: 102D, for two to four persons), the same amount of the same roasted beans (roasted beans ground under the same conditions), and similar hot water (PD method: Paper Drip).

Table 2 shows the results of a sensory rating. With extraction based on the conventional CD method and PD method, astringency or bitterness was perceived from the initial period of the extraction. In contrast, the CC method according to the present invention achieved extraction so as to allow separation of astringency or bitterness perceived during the initial period of the extraction, and produced a flavory and sweet coffee extract. On the other hand, it has been found that no method can separate astringency eluted during the middle and last period of the extraction, that is, when the extraction rate is about 25%, and left on the tongue. This indicates that a reduced extraction rate is effective in removing the astringency left on the tongue.

[Table 2]

| Extraction rate | CC method | CD method | PD method |
|---|---|---|---|
| 10% | Tastes moderately sweet<br><br>Flavory and no bitterness or astringency | Tastes coarse and astringent<br><br>Too bitter to drink | Tastes sharply bitter and astringent<br><br>Too bitter to drink |
| 15% | Tastes sweet<br><br>No bitterness or astringency but clean | Tastes slightly less coarse and astringent<br><br>Too bitter to drink | Tastes bitter and astringent<br><br>Too bitter to drink |
| 20% | Tastes clean | Tastes slightly clean | Tastes bitter and astringent |
| 25% | Astringency left on tongue starts to be felt | Astringency left on tongue starts to be felt | Tastes bitter and astringent |

<Example 2>

As is the case with Example 1, coffee extracts were obtained by the conventional CD method and PD method and the CC method according to the present invention. The coffee extracts were compared with one another in terms of the amounts of caffeine and chlorogenic acid obtained per unit solid with an extraction ratio (the ratio of the coffee extract to the extraction material = the coffee extract/extraction material) varied. For analysis, the coffee extracts as samples were filtered (0.45-$\mu$m filter) and subjected to HPLC analysis. HPLC analysis conditions are as follows.

HPLC conditions:

- Column: TSK-gel ODS-80TsQA (4.6 mm$\phi$ x 150 mm, TOSOH CORPORATION)
- Mobile phase: Liquid A: water : acetonitrile : trifluoroacetic acid = 900 : 100 : 0.5
  Liquid B: water : acetonitrile : trifluoroacetic acid = 200 : 800 : 0.5
- Flow velocity: 1.0 mL/min
- Column temperature: 40°C
- Gradient condition; analysis start to a lapse of 5 minutes: remains 0% on the gradient of Liquid B.
  Lapse of 5 minutes to 11 minutes: increases up to 8% on the gradient of Liquid B

Lapse of 11 minutes to 21 minutes: increases up to 10% on the gradient of Liquid B
Lapse of 21 minutes to 22 minutes: increases up to 100% on the gradient of Liquid B
Lapse of 22 minutes to 30 minutes: maintained at 100% on the gradient of Liquid B
Lapse of 30 minutes to 31 minutes: decreases to 0% on the gradient of Liquid B
- Detection: A280 nm

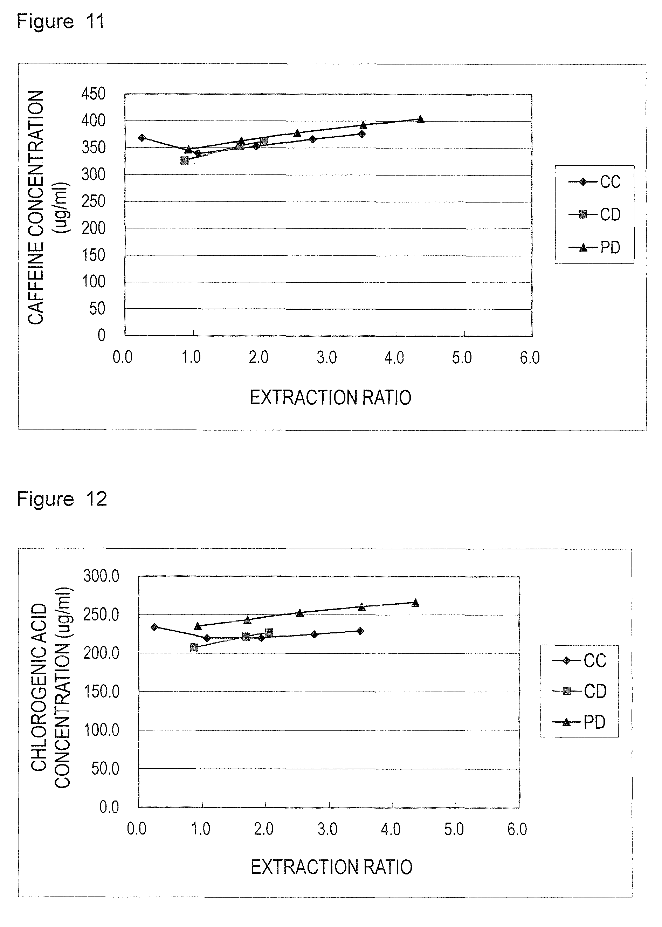

The results of analysis of caffeine and chlorogenic acid are shown in Figure 11. Figure 11 shows values in terms of the amounts of caffeine and chlorogenic acid per soluble solid (Brix). Figure 11 clearly shows that a coffee extract obtained by the CC method according to the present invention contains caffeine and chlorogenic acid similar in amounts to caffeine and chlorogenic acid in coffee extracts obtained by the conventional PD method and CD method, without depending on the extraction ratio. The analysis results, in combination with the sensory rating results in Example 1, suggest that the CC method according to the present invention allows manufacture of a coffee extract with an excellent flavor for which excessive bitterness and astringency are selectively reduced with ingredients such as caffeine and chlorogenic acid unchanged, the ingredients contributing significantly to the flavor.

<Example 3>

The coffee extract manufactured by the CD method in Example 1 was treated using an ultrafiltration membrane with a cut-off molecular weight of about 100,000 (VIVA SPIN 20 manufactured by SARTORIUS K.K.; cut-off molecular weight: 100,000), and the resultant liquid was retrieved and compared, in terms of flavor, with the coffee extract obtained by the CC method in Example 1. The results are shown in Table 3. When the coffee extract obtained by the conventional CD method was treated by the ultrafiltration membrane, the bitterness and astringency perceived during the initial period of the extraction were removed. This suggests that the CC method according to the present invention allows efficient removal of macromolecular bitter and astringent ingredients with a molecular weight of about 100,000 or more. As is apparent from Table 3, the CC method according to the present invention is superior to the CD method with the ultrafiltration membrane treatment in terms of sweetness.
[Table 3]

| Extraction rate | CC method | CD method |
|---|---|---|
| 10% | Tastes moderately sweet Flavory and tastes clear | Flavory and tastes clear |
| 15% | Tastes sweet Tastes clean and clear | Tastes clean and clear |
| 20% | Tastes clean and clear | Tastes clean and clear |
| 25% | Starts to taste astringent | Starts to taste astringent |

<Example 4>

As is the case with Example 1, coffee granules were placed in a granule container part 2 in a substantially sealed manner, and hot water or water was injected from the lower side of the extraction section E until the coffee granules were completely dipped in the water. Subsequently, hot water or water was injected through the upper opening 2A to produce a coffee extract (extraction rate: 14.1%) (CC method). Furthermore, for comparison, the same roasted coffee beans (ground under the same conditions) were filled in a commercially available coffee dripper (manufactured by KALITA CO., LTD.), and hot water or water was injected from the upper side of the coffee dripper to produce a coffee extract (extraction rate: 13.7%) (PD method). These coffee extracts were subjected to a sensory rating by six expert panelists. The coffee extracts were evaluated on a scale of 1 to 5 in terms of bitterness, fragrance, and taste ingredients (bitterness: bitterness decreases with increasing scale value, fragrance: the level of fragrance increases consistently with scale value, and taste ingredients: the number of (favorable) taste ingredients increases consistently with scale value).
The results are shown in Table 4. The CC method according to the present invention removed approximately all of the bitterness and produced favorable taste ingredients. In particular, it has been found that, when the temperature of water is high (about 90°C) during steps b and c, a coffee extract can be manufactured which has a much better fragrance than a coffee extract obtained by the conventional water drip (extraction at about 20°C by the PD method). Furthermore, if a first extraction (step b) and a second extraction (step c) are carried out at 20°C by the CC method, a larger amount of coffee extract can be manufactured in a shorter time than in the case of extraction at 20°C by the PD method. This indicates that the CC method according to the present invention is a high-yield method for manufacturing.
[Table 4]

| | Step b From lower side to upper side | Step c From upper side to lower side | Bitterness | Fragrance | Taste ingredient |
|---|---|---|---|---|---|
| CC method (present invention) | Hot water (about 90°C) | Hot water (about 90°C) | 4 | 5 | 5 |
| | Water (about 20°C) | Water (about 20°C) | 5 | 2 | 4 |
| PD method (conventional technique) | - | Hot water (about 90°C) | 1 | 5 | 5 |
| | - | Water (about 20°C) | 5 | 2 | 3 |

<Example 5>

Commercially available coffee beans were coarsely ground, and 15 g of the ground coffee beans were used for extraction by the CC method, the CD method, and the PD method. For the CC method, the same apparatus as that used in Example 1 (and the same lower and upper filter members as those used in Example 1) was used, and hot water (about 90°C) was injected from the lower side of the extraction section E until coffee granules were completely dipped in the water. Then, hot water (about 90°C) was injected through the upper opening 2A, and the resultant extract liquid was retrieved. For the CD method, coffee granules were placed in an apparatus similar to that used for the CC method, hot water (about 90°C) was injected through the upper opening 2A, and the resultant extract liquid was retrieved through the lower opening 2B. For the PD method, a conventional drip extractor (KALITA dripper, model number: 102D, for two to four persons) was used, and coffee granules were filled into a commercially available coffee filter (manufactured by KALITA CO., LTD.). Hot water was injected from the upper side of the coffee filter, and the resultant extract liquid was retrieved. Table 5 shows the amount of extract liquid retrieved (the amount of extract liquid sampled: g), the Brix (%) of the extract, and the extraction rate (%) of the extract liquid (the Brix is a value measured using a digital refractometer RX-5000$\alpha$ manufactured by ATAGO CO., LTD.).
[Table 5]

| | Amount of extract liquid sampled | Brix (%) | Extraction rate (%) |
|---|---|---|---|
| Column chromatography | 40.1 | 5.46 | 14.6 |
| Column drip | 40.8 | 4.51 | 12.3 |
| Paper drip | 40.4 | 5.44 | 14.7 |

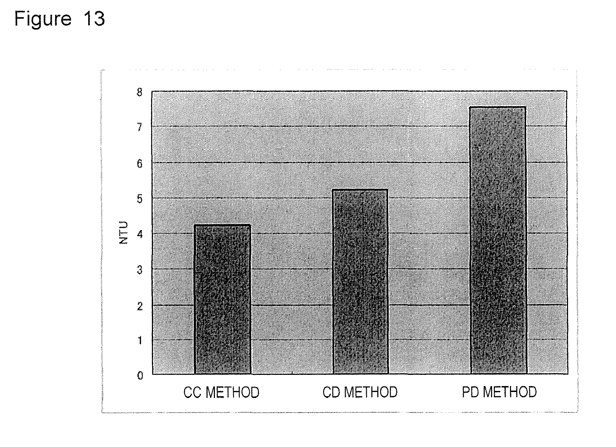

Water was added to extracts obtained by the CC method, the CD method, and the PD method so as to adjust the Brix of each extract liquid to 2.0%. The extracts were filtered using filter paper (no. 2), and the NTU turbidity of each of the extracts was measured using a NTU turbidimeter (2100AN) manufactured by HACH. The results are shown in Figure 13. Figure 13 clearly shows that the extract liquid according to the present invention has the lowest turbidity and the highest clarity. This also suggests that the coffee extract according to the present invention has high preservation stability.

<Example 6>

Arabica coffee beans were roasted so that the L value was 18, and were ground so that the average grain size was about 1.5 mm to produce coffee granules. Extraction was carried out by the CC method according to the present invention using an extraction device shown in Figure 7. As is the case with Example 1, a flannel cloth was used as a lower filter member 10, and as a restraining member (upper filter member) 11, a metal mesh of about 80 m/s was used around which silicon packing was installed to allow the metal mesh to tightly contact the column. The lower filter member 10 and the restraining member 11 were positioned in abutting contact and in alignment with a lower surface and an upper surface, respectively, of deposited layers of the coffee granules and to place the coffee granules in a substantially sealed manner. At this time, the amount of the coffee granules was 100 g, and the cross-sectional shape of a substantial rectangle in a direction along the axis of an extraction section E was such that the ratio (H/L) of the width (L) to height (H) of the rectangle was about 4. A three-way cock 9 was operated to inject 90-mL hot water (90°C) from the lower side of the apparatus to the extraction section E at SV = 1. When the surface of the hot water flowing upward through the coffee granule layer comes into contact with the upper filter member 11, the cock 9 was closed. Subsequently, 1,200-mL hot water (90°C) was injected toward the extraction section E through an upper opening 2A, and the resultant extract liquid was retrieved at SV = 1.

Basic conditions were set as described above, and the following were varied to be examined: the degree of grind of the coffee granules (average grain size), the shape of the extraction section, the temperature of water injected from the first direction multiplied by SV, and the temperature of water injected from the second direction multiplied by SV.

The results are shown in Table 6. In Table 6, circles denote a flavor equivalent to a flavor obtained under the basic conditions, and double circles denote a flavor better than the flavor obtained under the basic conditions.

[Table 6]

| Average grain size of beans (mm) | ~0.1 | ~0.5 | ~1.0 | ~1.5 | ~2.0 |
|---|---|---|---|---|---|
| | △ | ○ | ◎ | ◎ | ○ |

| Aspect ratio of beans (h/w) | 0.1 | 2 | 4 | 6 | 10 | 12 | 20 |
|---|---|---|---|---|---|---|---|
| | △ | ○ | ◎ | ◎ | ○ | ○ | △ |

| Water temperature (°C) | 30 | 60 | 90 |
|---|---|---|---|
| | ○ | ○ | ◎ |

| Flow from first direction | Flow velocity (space velocity sv) | 3 | 7 | 10 | 20 | 30 | 50 | 100 |
|---|---|---|---|---|---|---|---|---|
| | | ○ | ◎ | ◎ | ○ | ○ | ○ | ○ |
| | Amount of liquid transferred (bean volume ratio) | 0.3 | 0.5 | 1 | 1.5 | 2 | | |
| | | ○ | ◎ | ◎ | ○ | △ | | |

| Flow from second direction | Flow velocity (space velocity sv) | 3 | 7 | 10 | 20 | 30 | 50 | 100 |
|---|---|---|---|---|---|---|---|---|
| | | ○ | ◎ | ◎ | ○ | ○ | ○ | ○ |
| | Amount of liquid transferred (bean volume ratio) | 0.3 | 0.5 | 1 | 1.5 | 2 | 3 | 5 |
| | | ○ | ◎ | ◎ | ◎ | ◎ | ○ | △ |

<Example 7>

A coffee extraction device 1 was used which was similar to the coffee extraction device used in Test Example 1. Thirty-gram Robusta coffee beans grown in Indonesia and roasted in a French manner were ground at the medium level, and the ground coffee beans were placed in a granule container part 2. With a three-way cock 9 closed, 100-mL hot water (95°C) was injected into a hot water container 4. A lower tip of the hot water container 4 was fitted into an upper end (the position of a restraining member 11) of an extraction section E, and an operation of opening the three-way cock 9 was performed to inject hot water into the extraction section E through a lower opening 2B. When a surface of the hot water flowing upward through the granule layer in the extraction section E passes through the restraining member 11 and reaches a position 10 mm above the restraining member 11, the cock 9 was closed. Subsequently, 350-mL hot water was injected through an upper opening 2A in the granule container part, the cock 9 was opened, and a colorless portion and a faint yellow portion of an outflow liquid (extraction rate: about 1%) were disposed of. When the outflow liquid turned brownish, the outflow liquid started to be retrieved with the flavor thereof checked. When the outflow liquid became cervine and the color was subsequently lightened again, the outflow liquid continued to be retrieved with the flavor thereof similarly checked until the "very excellent" fractions completed flowing out. Then, the retrieval container was changed, and the retrieval was continued. When the "excellent" fractions completed flowing out, the retrieval was ended. The amount of extract liquid retrieved was 60 mL for the "very excellent" fractions (Extract 1 according to the present invention) and 40 mL for the "excellent" fractions (Extract 2 according to the present invention).

For comparison, extraction was carried out on the same roasted beans as those in the Example 7 (roasted beans ground under the same conditions) by the drip method (KALITA dripper, model number: 102D, for two to four persons) using 350-mL hot water (95°C) so that the extraction rate was about 15% (Comparative Example 1). Six expert panelists compared, in terms of flavor, Comparative Example 1 with each of Extract 1 according to the present invention, Extract 2 according to the present invention, and a mixture of a total amount of Extracts 1 and 2 according to the present invention (Extract 3 according to the present invention). All the panelists determined that all of Extracts 1 to 3 according to the present invention has much better flavors than Comparative Example 1. Extracts 1 to 3 according to the present invention were thick and flavory coffee liquids without excessively strong bitterness and had a very clean aftertaste and no astringent aftertaste left on the tongue, and were thus coffee with an excellent flavor.

<Example 8>

A coffee extract was manufactured in a manner similar to the manner of Example 7 except that 30-g each of granules were obtained by roasting, in an Italian manner, Arabica coffee beans grown in Indonesia and having the lowest market price and then grinding the roasted beans at the medium level and that a different amount of extraction solvent was injected from the lower side of an extraction section E. The amount of extraction solvent was set in two ways: the amount needed for a surface of hot water flowing upward through the granule layer in the extraction section E to come into contact with the restraining member 11 and the amount needed for the surface of the hot water flowing upward through the granule layer in the extraction section E to pass through the restraining member 11 and reach a position 10 mm above the restraining member 11. Six expert panelists evaluated the flavor of a retrieved liquid and all of the panelists determined that the bitterness and astringency were  significantly suppressed, making the coffee extract tasty.

<Example 9>

Thirty grams of commercially available brand coffee beans shown to have been roasted at the highest level for iced coffee were ground at the medium level. A technique similar to the technique in Example 7 was used to carry out extraction on the ground beans to obtain a 60-mL "very excellent" coffee extract and a 40-mL "excellent" coffee extract. The 60-mL "very excellent" coffee extract was diluted to 300 mL with cold water, and the diluted coffee extract was cooled in a refrigerator (5°C) (Extract 4 according to the present invention).

For comparison, 30 g of the same coffee granules as those used in Example 9 were placed in a French press coffee pot manufactured by Bodum (500-mL type), and hot water at 95°C was injected into the French press coffee pot. Four minutes later, an extract liquid was separated from the liquid to produce 300 mL of coffee extract, which was then cooled in the refrigerator (5°C) (Comparative Example 2). Extract 4 according to the present invention and Comparative Example 2 were evaluated for flavor by six exert panelists. Iced coffee corresponding to Extract 4 according to the present invention was tasty coffee having moderate bitterness and a rich fragrance even when drunk black. In contrast, Comparative Example 2 was very bitter and did not taste directly drinkable.

<Example 10>

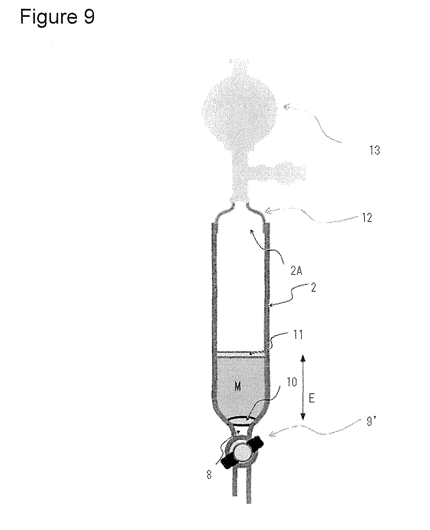

As an extraction device, a coffee extraction device was used which included a substantially cylindrical glass pipe  (inner diameter: 50 mm and length: 150 mm) having an upper opening and a lower opening (2A and 2B) and serving as a granule container part 2 as shown in Figure 9. The lower opening 2B in the granule container part 2 included an extraction pipe (glass pipe/chromatography pipe) with a two-way cock 9'. The same lower filter member 10 as that used in Example 7 was installed, and 30 g of coffee granules obtained by roasting, in an Italian manner, Arabica coffee beans grown in Ethiopia and grinding the roasted coffee beans at the medium level were placed on an upper surface of the lower filter member. A restraining member 11 with an outer diameter of 54 mm was installed on the coffee granules and included an O ring formed of wire with a diameter of 1 mm and having a diameter of 40 mm and sewed on four overlapping lint clothes. A safety pipetter 13 was installed above the granule container part 2 via a joint 12. A beaker with 50-mL hot water (95°C) was placed at a retrieval port 8 at the lower part of the granule container part 2. The retrieval port 8 was inserted into the hot water, and the two-way cock 9' and the safety pipetter 13 were operated to suck the hot water up to an upper end of an extraction section E. Then, the two-way cock 9' was closed, and the safety pipetter 13 was removed. One hundred-mL hot water (about 90°C) was injected into the extraction section E through an upper opening 2A of the granule container part 2. The safety pipetter 13 was installed again, and air pressure is applied to the granule container part 2. Then, the two-way cock 9' was opened, the first 10 mL of outflow liquid was disposed of, and the next 60 mL of outflow liquid was retrieved. The flavor of the retrieved liquid was checked and determined to belong to the "very excellent" class.

**Claims**

1.  A method for manufacturing a coffee extract, the method comprising:

    a) a step of placing coffee granules in a granule container part substantially sealed by a restraining member;
    b) a step of guiding an extraction solvent from a first direction into the granule container part for extraction; and
    c) a step of retrieving, from the first direction, a coffee extract stored in the granule container part.

2.  The method according to Claim 1, wherein, in step c), the coffee extract is retrieved by guiding water from a second direction opposite to the first direction.

3.  The method according to Claim 1 or 2, wherein, in step c), the coffee extract is retrieved in such a manner that an extraction rate is 20% or less.

4.  The method according to any one of Claims 1 to 3, wherein the restraining member is a mesh member.

5.  The method according to any one of Claims 1 to 4, wherein the coffee granules are accommodated so as to accumulate in such a manner that the coffee granules have a substantially rectangular cross-sectional shape in a direction along an axis.

6.  The method according to any one of Claims 1 to 5, wherein the restraining member is positioned in abutting contact with or in close proximity to a surface of deposited layers of the coffee granules which is opposite to the first direction.

7.  The method according to any one of Claims 1 to 6, wherein the first direction is on a lower side of the deposited layers of the coffee granules.

8.  The method according to any one of Claims 1 to 7, wherein, in step b), the extraction solvent is injected up to a position substantially aligning with a top surface of the deposited layers of coffee granules.

Figure 1

(a)　　　　　(b)　　　　　(c)　　　　　(d)

HOT WATER

▬▬▬▬ BITTER COMPONENTS

▭▭▭▭ AROMA COMPONENTS

▥▥▥▥ WATER-SOLUBLE TASTE COMPONENTS

Figure 2

Figure 3

A

B

35 mm
45 mm

37 mm
47 mm
58 mm

Figure 4

Figure 5

Figure 6

Figure 7

Figure 8

Figure 9

Figure 10

RELATION BETWEEN COLUMN EXTRACT LIQUID FRACTIONS OF 40-g
COFFEE GRANULES AND COMPONENT CONCENTRATION

Figure 11

Figure 12

Figure 13

## INTERNATIONAL SEARCH REPORT

| | International application No. |
|---|---|
| | PCT/JP2011/067625 |

| A. CLASSIFICATION OF SUBJECT MATTER |
|---|
| *A23F5/26*(2006.01)i |

According to International Patent Classification (IPC) or to both national classification and IPC

| B. FIELDS SEARCHED |
|---|
| Minimum documentation searched (classification system followed by classification symbols) |
| A23F5/26 |

Documentation searched other than minimum documentation to the extent that such documents are included in the fields searched

| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)
JSTPlus/JMEDPlus/JST7580(JDreamII)

| C. DOCUMENTS CONSIDERED TO BE RELEVANT |

| Category* | Citation of document, with indication, where appropriate, of the relevant passages | Relevant to claim No. |
|---|---|---|
| X/A | JP 4-38919 A (Kabushiki Kaisha Okawa Tekkosho), 10 February 1992 (10.02.1992), claims; figures (Family: none) | 1,3-8/2 |
| X/A | JP 1-148152 A (Suntory Ltd.), 09 June 1989 (09.06.1989), claims; Effects of the Invention; page 3, lower right column (Family: none) | 1,3-8/2 |
| Y/A | JP 2002-291412 A (UCC Ueshima Coffee Co., Ltd.), 08 October 2002 (08.10.2002), (Family: none) | 1,3-8/2 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 August, 2011 (17.08.11) | 30 August, 2011 (30.08.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/067625

C (Continuation).    DOCUMENTS CONSIDERED TO BE RELEVANT

| Category* | Citation of document, with indication, where appropriate, of the relevant passages | Relevant to claim No. |
|---|---|---|
| Y/A | JP 2006-55035 A  (Nihon Canpack Ltd.),<br>02 March 2006 (02.03.2006),<br>claims<br>(Family: none) | 1,3-8/2 |
| A | JP 2004-16586 A  (Kabushiki Kaisha Abekkusu),<br>22 January 2004 (22.01.2004),<br>(Family: none) | 1-8 |
| P,X | Chiseko SAKUMA et al., "Seikatsu Shukanbyo o Yobo suru Coffee o Chromatography de Ireru Hoho",  Abstracts of Annual Meeting of Pharmaceutical Society of Japan, 2011.03, vol.131st, no.3, page 252, #30P-0820 | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1148152 A
- JP 2004016586 A
- JP 2578316 B
- JP 2003310162 A

**Non-patent literature cited in the description**

- **YUKIO HIROSE et al.** Kohigaku Kougi. Ningen No Kagakusha, 2003
- **MAKOTO TAKAGI.** *Kohibunka Kenkyu,* 2008, vol. 15, 113-134
- **M.R. JISHA et al.** *Mater. Chem. Phys.,* 2009, vol. 115, 33-39